## Europäisches Patentamt
## European Patent Office
## Office européen des brevets

(11) Veröffentlichungsnummer: **0 152 771**
**B1**

(12) **EUROPÄISCHE PATENTSCHRIFT**

(45) Veröffentlichungstag der Patentschrift:
25.01.89

(21) Anmeldenummer: 85100535.5

(22) Anmeldetag: 21.01.85

(51) Int. Cl.⁴: **G 01 P 5/02**

(54) Vorrichtung zum Bestimmen der Geschwindigkeit eines Surfbrettes.

(30) Priorität: 02.02.84 DE 3403616

(43) Veröffentlichungstag der Anmeldung:
28.08.85 Patentblatt 85/35

(45) Bekanntmachung des Hinweises auf die Patenterteilung:
25.01.89 Patentblatt 89/4

(84) Benannte Vertragsstaaten:
AT BE CH DE FR GB IT LI LU NL SE

(56) Entgegenhaltungen:
DE-C-258 669
DE-C-3 219 393
FR-A-1 403 630
GB-A-271 511
US-A-4 091 666

(73) Patentinhaber: Pomikacsek, Josef, Dipl.- Ing.,
Esplanade 27, A-4810 Gmunden (AT)

(72) Erfinder: Pomikacsek, Josef, Dipl.- Ing., Esplanade
27, A-4810 Gmunden (AT)

(74) Vertreter: Hafner, Dieter, Dr.rer.nat., Dipl.- Phys.,
Ostendstrasse 132, D-8500 Nürnberg 30 (DE)

EP 0 152 771 B1

## Beschreibung

Die Erfindung betrifft eine Vorrichtung zum Bestimmen der Geschwindigkeit eines Wasserfahrzeuges, insbesondere eines Surfbrettes mit den Merkmalen des Oberbegriffes des Anspruches 1.

Aus der britischen Patentschrift GB-A-271 511 ist eine Vorrichtung zum Bestimmen der Geschwindigkeit eines Wasserfahrzeuges bekannt geworden, die ein Meß- und Anzeigeinstrument an Bord des Wasserfahrzeuges aufweist. Teil dieses Instruments ist ein elastisch deformierbares Meßelement, dessen Deformation durch die auf einen mit ihm verbundenen Staukörper einwirkende geschwindigkeitsabhängige Staukraft bestimmmbar ist. Das Meßelement ist als Feder dargestellt, die in Feder-Längsrichtung auf Zug beansprucht wird.

Ferner sind Führungselemente vorgesehen, durch die dafür Sorge getragen wird, daß der Staukörper bei Fahrtaufnahme des Wasserfahrzeuges nicht auftaucht. Die Führungselemente sind seitlich knapp oberhalb der Wasseroberfläche an der Bordwand eines Schiffes angeordnet und wirken derart, daß das Schleppseil des Staukörpers bereits mit spitzem Winkel in die Wasseroberfläche eintaucht. Weiterhin sind Strömungsflächen am Staukörper vorhanden, die ein Abtauchen des Staukörpers bei Fahrt sicherstellen.

Eine derartige Vorrichtung ist kompliziert, an leichten Wasserfahrzeugen wie beispielsweise Surfbrettern nur bedingt verwendbar, und nachteilig, was die Grundempfindlichkeit und Meßbereichseigenschaften anbelangt, es sei denn, es wird ein hoher Aufwand bei der Ausgestaltung des eigentlichen Meßinstrumentes vorgenommen.

Der Erfindung liegt die Aufgaber zugrunde, eine Vorrichtung mit den Merkmalen des Obergriffes des Anspruchs 1 derart weiterzubilden, daß sie einfach aufgebaut ist, an kleinen Wasserfahrzeugen verwendet werden kann, eine gute Grundempfindlichkeit aufweist und auch bezüglich ihrer Meßbereichseigenschaften verbessert ist. Diese Aufgabe wird durch die Merkmale des Anspruches 1 gelöst, vorteilhafte Weiterbildungen der Erfindung ergeben sich aus den nachfolgenden Ansprüchen 2 - 5.

Bresonders einfache konstruktionsverhältnisse betreffend das Meßelement ergeben sich die Merkmale des kennzeichnenden Teils des Anspruchs 1. Durch die - bezogen auf die Zugrichtung - querliegende Anordnung des Gummiseils kann der Platzaufwand der Anzeigeeinheit verringert werden; ferner ermöglicht dies gute Grundempfindlichkeits- und Meßbereichseigenschaften.

Die Erfindung ist anhand des in der Zeichnung dargestellten Ausführungsbeispieles näher erläutert. Die Zeichnungsfiguren zeigen:

Fig. 1 eine perspektivische Darstellung einer erfindungsgemäßen Vorrichtung zur Bestimmung der Geschwindigkeit eines Surfbrettes;
Fig. 2 eine Vorrichtung gemäß Fig. 1 im Ruhezustand in Seitenansicht;
Fig. 3 eine Ansicht gemäß Fig. 2 im Betriebszustand.

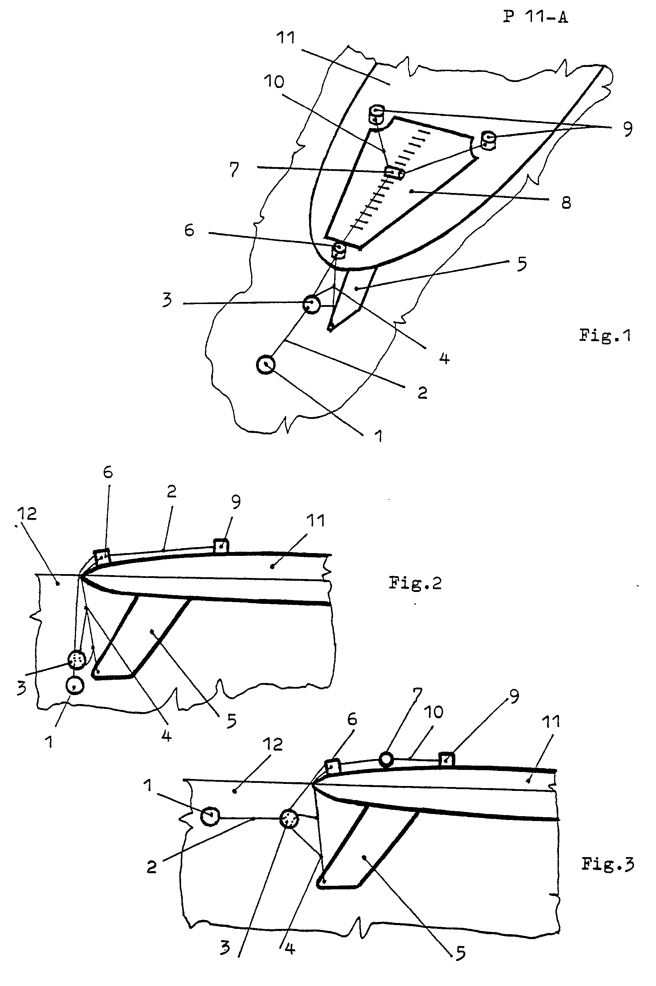

Wie zunächst aus Fig. 1 hervorgeht, kann die erfindungsgemäße Vorrichtung an dem hinteren Ende eines Surfbrettes 11 angebracht werden. Die auf den Staukörper 1 wirkende geschwindigkeitsabhängige Staukraft wird mit einem Seil 2 auf ein Gummiseil 10 übertragen. Das Seil wird durch ein Seilführungselement geführt, welches mit Befestigungsseilen 4 am Surfbrett 11 mit Spiel und lose befestigt ist. Weiter wird das Seil durch ein Positionierungsglied 6 auf der Oberseite des Surfbrettes geführt. Dieses Positionierungsglied 6 ist am hinteren Ende des Surfbordes angebracht und nimmt zu den beiden Bespannungspunkten 9, an denen das Gummiseil 10 beidendseitig befestigt ist, gleiche Abstände ein. Zwischen dem Positionierungsglied 6 und den beiden Bespannungspunkten 9 ist eine Anzeigeskala 8 angeordnet, die mit einem Anzeigeelement 7 zusammenwirkt, das mittig, d. h. mit gleichmäßigen Abständen zu den beiden Bespannungspunkten 9 auf dem Gummiseil befestigt ist.

In Fig. 2 ist die Vorrichtung bei Stillstand des Wasserfahrzeuges dargestellt. Das Seilführungselement 3 ist so ausgebildet, daß das Meßseil 2 und das Befestigungsseil 4 in ihm frei beweglich sind. Falls das spezifische Gewicht des Staukörpers und des Seilführungselementmaterials größer als 1 ist, wird die dargestellte hängende Position des Staukörpers 1 sowie des Seilführungselementes 3 durch die Schwerkraft bestimmt. Damit liegen alle Elemente der Vorrichtung in der Nähe des Brettkörpers; durch die elastische Aufhängung wird ein optimaler Schutz gegen Fremdkörper gewährleistet.

In Fig. 3 ist die Vorrichtung im Betriebszustand, d. h. bei Fahrt des Wasserfahrzeuges dargestellt. Durch die Zugspannung des Seils 2 wirken auf das Seilführungselement 3 Auftriebskräfte, die durch die Staukraft des Seilführungselementes 3 und die Seilkräfte des Befestigungsseiles 4 kompensiert werden.

Durch die auf das Seilführungselement 3 sowie den Staukörper 1 wirkenden Staukräfte nehmen die Elemente die in Fig. 3 dargestellte Stellung ein.

Das Befestigungsseil 4 kann an zwei Punkten an der Hinterkante des Hilfsschwertes angebracht werden.

## Patentansprüche

1. Vorrichtung zur Bestimmung der Geschwindigkeit eines Wasserfahrzeuges, insbesondere eines Surfbrettes, bestehend aus einem an Bord des Wasserfahrzeuges vorgesehenen, elastisch deformierbaren Meßelements (10), dessen Deformation von der geschwindigkeitsabhängigen Staukraft abhängt, die auf einen meit dem Meßelement (10) über ein Seil (2) oder dergl. verbundenen Staukörper (1) einwirkt, und aus einer am Wasserfahrzeug vorgesehenen Führung (3, 4) für des gennante Seil (2), durch die beim Meßvorgang ein Auftauchen des Staukörpers (1) an die Oberfläche des Wasser (12) verhindert wird, dadurch gekennzeichnet, daß das Meßelement aus einem an beiden Enden zwischen zwei Bespannungspunkten (9) eingespannten, langgestreckten, elastischen Gummielement (10) besteht, das beim Meßvorgang mittig und etwa rechtwinklig zur Verbindungslinie der Bespannungspunkte in folge der genannten, durch das genannte Seil (2) auf das Gummielement (10) übertragenen Staukraft ausgelenkt wird und die Anzeigebewegung eines Anzeigelements (7) relativ zu einer an Bord des Wasserfahrzeugs vorgesehenen Anzeigeskala (8) verursacht.

2. Vorrichtung nach Anspruch 1, dadurch gekennzeichnet, daß der Staukörper (1) mit dem Seil (2) in der Mitte des Gummiseil (10) ausbebildeten Gummielements befestigt ist und das Seil (2) das Seilführungselement (3) durchsetzt, das beweglich unter der Oberfläche des Wassers (12) am Wasserfahrzeug befestigt ist.

3. Vorrichtung nach einem der vorhergehenden Ansprüche, dadurch gekennzeichnet, daß am Ende des Körpers des Wasserfahrzeuges ein Positionierungsglied (6) angeordnet ist, das zu den Bespannungspunkten (9) gleiche Abstande aufweist.

4. Vorrichtung nach einem der vorhergehenden Ansprüche, dadurch gekennzeichnet, daß das Seilführungselement (3) mittels eines Befestigungsseiles (4) beweglich am Hilfsschwert (5) des als Surfbrett ausgebildeten Wasserfahrzeuges angeordnet ist.

5. Vorrichtung nach einem der vorhergehenden Ansprüche, dadurch gekennzeichnet, daß die Anzeigeskala (8) zwischen den Bespannungspunkten (9) und dem Positionierungsglied (6) angeordnet ist.

## Claims

1. Device for determining the speed of a watercraft, particularly of a surfboard, comprising an

elastically deformable measuring instrument (10) provided on board of a watercraft the deformation of which is contingent on the speed-dependent backup pressure, acting on a backup body (1) connected to a measuring element (10) via a cable (2) or similar, and of a guide (3, 4) which prevents the backup body (1) from emerging to the surface of the water (13), characterized by the fact that the measuring element consists of a long-streched-out elastic rubber element (10) clamped on both ends between two tensioning points (9) which during the measuring process is being centrally deflected and approximately in a right angle to the connecting line of the tensioning points due to the backup force transmitted by the said rope (2) on the rubber element (10), producing the indicating movement of an indicating element (7) in relation to an indicating scale (8) provided on board of the watercraft.

2. A device according to claim 1, characterized by the fact that backup body (1) is fastened with rope (2) in the centre of the rubber rope element designed as rubber rope (1) and that rope (2) is running through the rope guide element (3) which is movably fastened on the watercraft underneath the surface of the water (12).

3. A device according to one of the above claims, characterized by the fact that a positioning element (6) is arranged at the end of the watercraft body being in equidistance to the tensioning points (9).

4. A device according to one of the above claims, characterized by the fact that the rope guide element (3) is movably arranged by means of fastening rope (4) on the auxiliary skeg (stabilizing fin) (5) of the watercraft designed as surfboard.

5. A device according to one of the above claims, characterized by the fact that the indicating scale (8) is arranged between the tensioning parts (9) and the positioning element (6).

## Revendications

1. Dispositif pour déterminer la vitesse d'un véhicule flottant sur l'eau, notamment d'une planche à voile, consistant en:

un élément de mesurage (10) élastique et déformable, prévu pour être installé à bord du véhicule flottant sur l'eau, et dont la déformation est assujettie à la force dynamique exercée sur un corps de retenue (1) relié à l'élément de mesurage (10) par le biais d'un câble (2) ou autre chose similaire, ainsi qu'en un guidage (3, 4) pour tout le câble (2) fixé au véhicule empêchant le corps (1) d'émerger de la surface d'eau lors du mesurage. Ce dispositif se caractérise par le fait que

l'élément de mesurage se compose d'un membre en caoutchouc (10) allongé, élastique et serré aux deux bouts entre deux points de serrage (9) et qui, en cours de mesurage, est dévié axialement et à peu près perpendiculairement à la ligne de jonction des deux points de serrage à la suite de la force dynamique exercée sur l'élément de serrage (10) par le câble (2) mentionné ci-dessus. Cela provoque un mouvement de l'élément indicateur (7) relatif à une échelle (8) qui sera installée à bord du véhicule.

2. Dispositif selon la revendication 1,
se caractérisant par le fait
que le corps (1) est attaché au câble (2) au milieu de l'élément en caoutchouc - un câble en cautchouc (10) - et que ce câble (2) passe par le guidage du câble (3) fixé flexiblement au véhicule en-dessous de la surface d'eau (12).

3. Dispositif selon une des revendications précédentes,
se caractérisant par le fait
qu'un membre de positionnement (6) est diposé au bout du corps du véhicule, à distances égales par rapport aux points de serrage (9).

4. Dispositif selon une des revendications précédentes,
se caractérisant par le fait
que le guidage du câble (3) est attaché flexiblement à l'aileron (5) du véhicule (planche à voile), à l'aide d'un câble de fixation (4).

5. Dispositif selon une des revendications précédentes,
se caractérisant par le fait que
l'échelle indicatrice (8) est disposée entre les points de serrage (9) et le membre de positionnement (6).

P 11-A

Fig.1

Fig.2

Fig.3